Europäisches Patentamt

European Patent Office

Office européen des brevets

(11) Veröffentlichungsnummer: **0 416 247 A2**

# EUROPÄISCHE PATENTANMELDUNG

(21) Anmeldenummer: 90113411.4

(22) Anmeldetag: **13.07.90**

(51) Int. Cl.5: **B29C 51/08**

(30) Priorität: **07.09.89 DE 3929826**

(43) Veröffentlichungstag der Anmeldung:
**13.03.91 Patentblatt 91/11**

(84) Benannte Vertragsstaaten:
**AT BE CH DE DK ES FR GB GR IT LI LU NL SE**

(71) Anmelder: **Schmalbach-Lubeca AG**
**Schmalbachstrasse 1**
**W-3300 Braunschweig(DE)**

(72) Erfinder: **Hexel, Günter, Dipl.-Ing.**
**Friedrich-Löffler-Weg 60**
**W-3300 Braunschweig(DE)**

(74) Vertreter: **Fricke, Joachim, Dr. et al**
**Dr.-Ing. R. Döring, Dipl.- Phys. Dr. J. Fricke,**
**Dipl.-Phys. M. Einsel Josephspitalstrasse 7**
**W-8000 München 2(DE)**

(54) **Verfahren zum Tiefziehen von Kunststoff-Folien.**

(57) Beim Tiefziehen von Kunststoff-Folien zur Herstellung von Behältern mit Hilfe eines in eine Ziehform einfahrenden Ziehstempels und mehrerer am Ziehstempel radial bewegbarer Spreizelemente ist vorgesehen den Ziehstempel bei seiner Einwärtsbewegung diskontinuierlich zu bewegen und ihn für jeweils eine vorbestimmte Verweilzeit in seiner Einwärtsbewegung anzuhalten. Dies kann mit einer kontinuierlichen oder diskontinuierlichen Bewegung der Spreizbackenelemente kombiniert werden.

EP 0 416 247 A2

ren kleinen Schritten diskontinuierlich vorzunehmen.

Die Verweilzeiten und deren Verteilung richtet sich nach der Art des verwendeten Folienmaterials und nach der Art und dem Ausmaß des Tiefzieh-. vorganges.

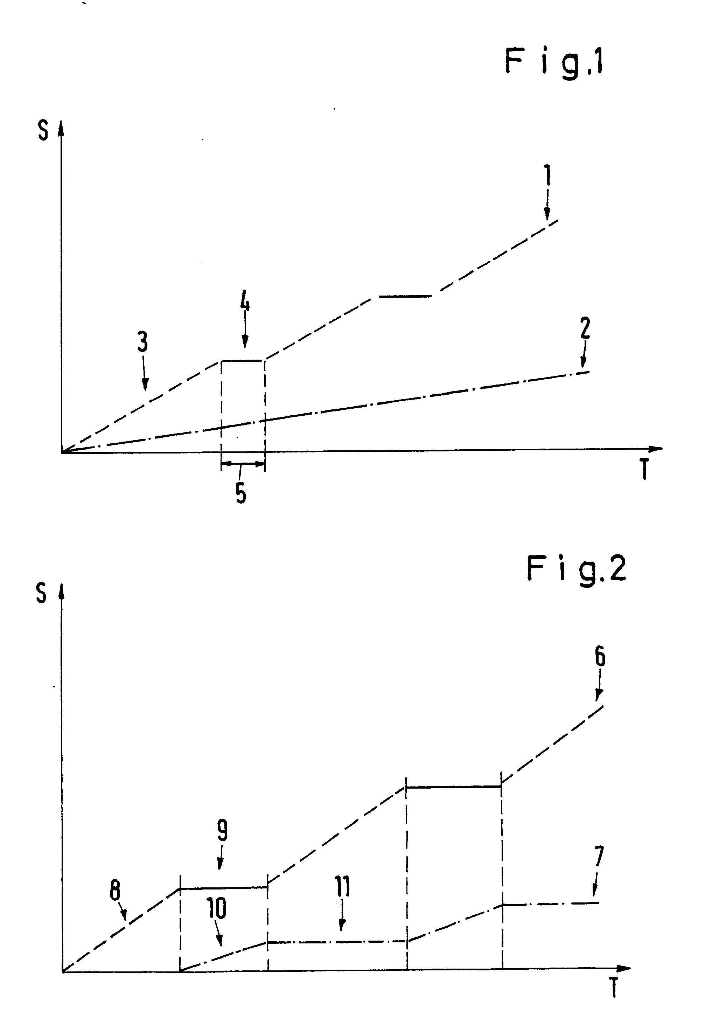

In den Figuren 1 und 2 sind unterschiedliche Beispiele zur Ausführung des Verfahrens grafisch dargestellt.

In den Figuren ist der Weg einerseits des Ziehstempels und andererseits des Spreizbackenelementes in Abhängigkeit von der Zeit dargestellt.

Bei dem Ausführungsbeispiel nach Figur 1 gibt die gestrichelte Kurve 1 den Weg des Ziehstempels und die strichpunktierte Kurve 2 den Weg der Spreizbackenelemente wieder. Während die Spreizbackenelemente während des Tiefziehvorganges eine gleichförmige kontinuierliche Bewegung erfahren, erfolgt die Bewegung des Ziehstempels schrittweise. Jeweils nach einer Phase 3 der kontinuierlichen Einwärtsbewegung wird die Bewegung bei 4 unterbrochen und der Ziehstempel für eine vorbestimmte Zeitdauer 5 angehalten.

Bei dem Beispiel nach Figur 2 ist jeweils eine Zeitperiode der kontinuierlichen Einwärtsbewegung 8 des Ziehstempels (siehe Kurve 6) verbunden mit einer Verweilzeit 11 der Spreizbackenelemente (siehe Kurve 7). Auf der anderen Seite ist einer Verweilzeit 9 des Ziehstempels eine Phase 10 von kontinuierlicher Bewegung der Spreizbackenelemente zugeordnet.

Die Kurven 6 und 7 der Figur 2 können auch entlang der Zeitachse gegeneinander verschoben werden.

## Ansprüche

1. Verfahren zum Tiefziehen von Kunststoff-Folien zwecks Herstellung von hohlen Artikeln mit Hilfe einer Ziehform, eines axial gegenüber dieser beweglichen Ziehstempels und einer Mehrzahl von am Ziehstempel in radialer Richtung ausfahrbar oder ausschwenkbar gelagerten, an der Kunststoff-Folie angreifenden Spreizbackenelementen, die in vorbestimmter Abhängigkeit von der axialen Einwärtsbewegung des Ziehstempels in die Ziehform radial nach außen bewegt werden, dadurch **gekennzeichnet**, daß der Ziehstempel bei seiner axialen Einwärtsbewegung in die Ziehform diskontinuierlich bewegt wird.

2. Verfahren nach Anspruch 1, dadurch **gekennzeichnet**, daß der Ziehstempel axial einwärts in mehreren diskreten Schritten bewegt wird und nach jedem Schritt für eine vorbestimmte Verweilzeit angehalten wird.

3. Verfahren nach Anspruch 1 oder 2, dadurch **gekennzeichnet**, daß die Spreizbacken während der gesamten diskontinuierlichen Einwärtsbewegung des Ziehstempels selber kontinuierlich radial nach außen bewegt werden.

4. Verfahren nach Anspruch 1 oder 2, dadurch **gekennzeichnet**, daß die Spreizbacken während des Tiefziehvorganges ebenfalls diskontinuierlich oder schrittweise radial nach außen bewegt werden.

5. Verfahren nach Anspruch 4, dadurch **gekennzeichnet**, daß die diskontinuierlichen Bewegungen von Ziehstempel und Spreizbacken in vorbestimmter Weise aufeinander abgestimmt werden.

6. Verfahren nach Anspruch 5, dadurch **gekennzeichnet**, daß die schrittweisen Bewegungen von Ziehstempel und Spreizbacken im wesentlichen synchron vorgenommen werden.

7. Verfahren nach Anspruch 5, dadurch **gekennzeichnet**, daß die Spreizbacken jeweils während der Halte- oder Verweilzeiten des Ziehstempels in radialer Richtung um einen Schritt kontinuierlich oder in mehreren kleinen Schritten diskontinuierlich bewegt werden.

8. Verfahren nach einem der Ansprüche 1 bis 7, dadurch **gekennzeichnet**, daß die Halte- oder Verweilzeiten von Ziehstempel und/oder von Spreizbacken in Abhängigkeit von dem Nachfließvermögen des Kunststoffes der Kunststoff-Folien gewählt werden.

F i g.1

F i g.2